# EUROPÄISCHE PATENTSCHRIFT

(11) **EP 1 368 428 B1**
(45) Veröffentlichungstag und Bekanntmachung des Hinweises auf die Patenterteilung: **04.01.2006**
(21) Anmeldenummer: 02719722.7
(22) Anmeldetag: 24.01.2002
(51) Int. Cl.: C08L 83/04, C08K 5/00

(54) **POLYORGANOSILOXAN-ZUSAMMENSETZUNG**
POLYORGANOSILOXANE COMPOSITION
COMPOSITION DE POLYORGANOSILOXANE

(30) Priorität: 26.01.2001 DE 10103421
(43) Veröffentlichungstag der Anmeldung: 10.12.2003
(73) Patentinhaber: GE Bayer Silicones GmbH & Co. KG, 51368 Leverkusen (DE)
(72) Erfinder: PUTZER, Markus, Alexander, 51375 Leverkusen (DE)
(86) Internationale Anmeldenummer: PCT/EP2002/000718
(87) Internationale Veröffentlichungsnummer: WO 2002/062897

(56) Entgegenhaltungen:
- EP-B- 0 520 717
- WO-A-96/27636
- US-A- 4 100 129
- US-A- 4 483 973
- US-A- 5 420 196

## Beschreibung

Die Erfindung betrifft eine Polyorganosiloxan-Zusammensetzung, ein Verfahren zum Zusammengeben der Komponenten sowie ein Verfahren zum Vulkanisieren der genannten Polyorganosiloxan-Zusammensetzung, die dabei erhältliche vulkanisierte Zusammensetzung, Verbundmaterialien, die ein Substrat und die genannte vulkanisierte Zusammensetzung enthalten, sowie die Verwendung der Polyorganosiloxan-Zusammensetzung.

Die Erfindung betrifft insbesondere bei Raumtemperatur neutral vemetzende Einkomponenten-Siliconkautschukmischungen, die nach der Vulkanisation eine sofortige Haftung auf Polymethylmetharylat (PMMA) aufweisen, ein Verfahren zu deren Herstellung und deren Verwendung. Neutral vernetzend bedeutet, daß während der Vernetzung keine korrosiven oder geruchsintensiven Spaltprodukte freigesetzt werden.

Polyorganosiloxanmassen, im folgenden RTV-1K (Raumtemperaturvulkanisierende Einkomponenten) Alkoxysysteme genannt, sind anwendungsfertige und unter Ausschluss von Feuchtigkeit lagerfähige Massen, die erst bei Zutritt von Luftfeuchtigkeit unter Abspaltung von Alkoholen zu Elastomeren reagieren. Produkte dieser Art mit erhöhter Lagerbeständigkeit sind seit langer Zeit bekannt und im Markt u.a. für den Einsatz als Fugendichtstoffe etabliert (DE 195 07 416). Dabei ist, wie hier gezeigt, auch die Herstellung von transparenten Polyorganosiloxanzusammensetzungen möglich Sie bestehen aus mit Organyloxygruppen terminiertem Siliconpolymer, gegebenenfalls unreaktiven Polysiloxanweichmachern, Alkoxysilanvernetzern mit mindestens drei hydrolysierbaren Gruppen, Katalysatoren, Füllstoffen und gegebenenfalls weiteren Hilfsstoffen. Der Vorteil dieser Alkoxysysteme ist, dass sie beim Verlauf des Vulkanisationsvorganges lediglich geruchslose, neutrale, umweltverträgliche Alkohole als Spaltprodukte freisetzen. Die vorliegende Erfindung betrifft im speziellen transparente RTV-1K-Massen, die sofort nach der Vulkanisation Haftung auf Polymethylmethacrylat (PMMA) zeigen.

Polymethylmethacrylat (PMMA), kommerziell bekannt unter der Bezeichnung Plexiglas® (Firma Rohm & Haas und Firma Röhm), ist ein weit verbreiteter Werkstoff im Bauwesen, beim Glas- und Fensterbau sowie im Sanitärbereich. In der Fahr- und Flugzeugindustrie wird es u.a. zur Herstellung von bruchsicheren Verglasungen und Leuchtabdeckungen verwendet. Weitere Anwendung findet PMMA in der Optik, wo es zur Herstellung von Linsen und Lichtleitfasern eingesetzt wird. Als Coatingmaterial für Werkstoffe kommt ebenfalls PMMA zum Einsatz. So werden z.B. Oberflächen von Fensterrahmen mit PMMA behandelt, um einen holzimitierenden Effekt zu erzielen, oder Aluminiumleisten mit PMMA-Pulverlacken behandelt, um sie vor Umwelteinflüssen zu schützen oder sie zu färben. Die sofort nach dem Vemetzungsprozess aufgebaute Haftung auf PMMA stellt daher neben der Dauerelastizität eine wichtige Eigenschaft der RTV-1K-Massen dar.

Bereits bekannte, auf neutralen Alkoxysystemen basierende, transparente RTV-1K-Silicondichtstoffe zeigen gutes, nach der Vulkanisation sofort aufgebautes Haftvermögen u.a. auf den Substraten Glas, Aluminium und Polyvinylchlorid (PVC). Eine Haftung auf anderen Kunststoffsorten, wie z.B. PMMA, ist dagegen weitaus schwieriger zu erreichen. So berichten z.B. Lucas et al. in US 4,483,973 und US 4,528,353 von transparenten, neutral vernetzenden RTV-1K-Siliconmassen, die unter Zuhilfenahme von Aminosilanen als Haftmittel hervorragende dauerhafte Haftung auf Glas, Metallen, Keramiken und einer Reihe von Kunststoffen, wie z.B. ABS, Noryl®, Polystyrol und Nylon zeigen, während auf PMMA keine Haftung vorhanden ist.

In US 5,175,057 werden einkomponentige Alkoxymassen vorgestellt, die auf einem Dialkylzinn-bis-diketonat als Katalysator, auf "M, D, T"-Silanol sowie auf mit Amino-, Ether-, Epoxy-, Isocyanat-, Cyano-, Acryloxy- und Acyloxyradikalen funktionalisierten Alkoxysilanen als Haftmittel basieren. Keine der in US 5,175,057 vorgestellten Massen zeigen sofort nach der Vulkanisation Haftung auf PMMA. Weitere Versionen dieser Siliconkautschukmischungen werden von Lucas in US 5,232,982 offenbart. Sie besitzen ein breiteres Haftspektrum auf Kunststoffen, speziell auf Polycarbonat, versagen jedoch auf PMMA.

Die in US 4,680,364 beschriebenen selbsthaftenden RTV-1K-Massen basieren auf der Wirkung von Titanchelaten als haftvermittelnde Additive. Die hier beschriebenen RTV-1K-Massen zeigen zwar ein breiteres Haftspektrum, die Haftung auf PMMA wird jedoch nicht beschrieben. Desweiteren wirken sich die schlechte Löslichkeit von Titanchelaten in Polydimethylsiloxan (PDMS) und die damit einhergehende Trübung der Siloxanmassen sowie die rötliche Eigenfarbe der in US 4,680,364 genannten Chelate nachteilig auf die Transparenz der RTV-1K-Massen aus.

In den Patenten US 4,506,058, US 4,100,129, US 4,514,529, US 4,273,698, US 4,962,152, US 4,623,693, US 4,672,003, US 4,891,393, US 4,585,821 und US 5,962,559 werden weitere RTV-1K-Massen mit Selbsthaftung ohne Verwendung von Primern vorgestellt. Keines dieser Patente enthält jedoch einen Hinweise auf die Haftung der RTV-1K-Massen nach der Vulkanisation auf PMMA.

Lucas stellt in US 5,420,196 erstmalig einen transparenten, nicht auf Titanverbindungen basierenden RTV-Dichtstoff vor, der selbständig nach seiner Vulkanisation auf PMMA haftet. Der Nachteil des in US 5,420,196 erwähnten RTV-1K-Dichtstoffes ist jedoch der Anteil an stabilisierend wirkendem Hexamethyldisilazan, welches durch Hydrolyse beim Zutritt von Luftfeuchtigkeit einen beißenden Ammoniakgeruch verursacht, der die Anwendbarkeit dieses Systems drastisch beschränkt. Desweiteren wirkt sich der in US 5,420,196 beschriebene Einsatz einer Kombination aus drei verschiedenen haftvermittelnden Additiven mit bis zu 1,1 % der jeweiligen Komponenten nachteilig bezüglich des Materialkosten aus.

Friebe et al. stellen in DE 195 33 915 neutrale, auf metallorganischen Zinnverbindungen und Phosphorsäureestern basierende RTV-1K-Massen vor. Die Anwendung der Zinn-Phosphat-Technologie wird von Friebe auch in DE 197 57 308 beschrieben. Trotz der allgemein gelösten Aufgabe haftende Siloxanmassen zur Verfügung zu stellen, lag jedoch keinem dieser Patente die spezielle Aufgabe der Verbesserung der Haftung von RTV-1K-Dichtstoffen auf Substraten, insbesondere auf Kunststoffen oder gar auf PMMA, zugrunde.

Diese Erfindung hatte die Aufgabe, Polyorganosiloxan-Zusammensetzungen, bereitzustellen, die sofort nach dem Vulkanisationsprozess und ohne Verwendung von Primern Haftung an Kunststoffsubstrate, insbesondere auf PMMA-Oberflächen zeigen, und die die Nachteile der im Stand der Technik beschriebenen RTV-1K-Massen, wie unzureichende Geruchseigenschaften bzw. im Falle zinnfreier Katalysatorsysteme unzureichende Transparenz oder mangelnde Lagerstabilität nicht aufweisen. Dabei meint Lagerstabilität, die Eigenschaft der RTV-1-K-Massen definierte Zeit unter Feuchtigkeitsausschluß lagerbar und anschließend nach Zutritt von Umgebungsluft vernetzungsfähig zu sein. Die durch die vorliegende Erfindung bereitgestellten Zusammensetzungen sollen daher insbesondere im Falle zinnhaltiger Katalysatorsysteme transparente, geruchlose, bei Raumtemperatur neutral vulkanisierende Polyorganosiloxanzusammensetzungen sein.

Überraschend wird die oben beschriebene Aufgabenstellung gelöst durch die Bereitstellung einer Polyorganosiloxan-Zusammensetzung, enthaltend:
a) mindestens ein vernetzungsfähiges Polyorganosiloxan,
b) mindestens einen , Alkoxysilan-/siloxanvernetzer
c) mindestens einen Phosphorsäureester und/oder ein Salz davon,
d) mindestens einen zinnhaltiger Katalysator oder mindestens ein Titanchelat-haltiger Katalysator,
e) mindestens ein Aminoalkylsiloxan,
f) 0,05 bis 2 Gew.-%, bezogen auf 100 Gew.-% der Zusammensetzung, mindestens eine Verbindung ausgewählt aus der Gruppe, die besteht aus einem Isocyanurat der Formel 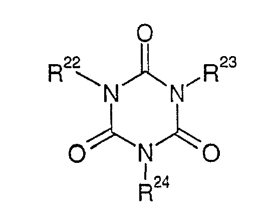
worin R²², R²³ und R²⁴ gleich oder verschieden voneinander sein können und jeweils unabhängig voneinander ausgewählt werden aus der Gruppe, die besteht aus Trisalkoxysilylalkyl und Alkenyl, mit der Maßgabe, dass mindestens einer der Substituenten R²², R²³ und R²⁴ eine Trisalkoxysilylalkylgruppe ist,
einem Cyanurat der Formel 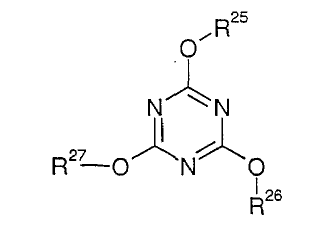
worin R²⁵, R²⁶ und R²⁷ gleich oder verschieden voneinander sein können und jeweils unabhängig voneinander ausgewählt werden aus der Gruppe, die besteht aus Trisalkoxysilylalkyl und Alkenyl, mit der Maßgabe, dass mindestens einer der Substituenten R²⁵, R²⁶ und R²⁷ eine Trisalkoxysilylalkylgruppe ist,
sowie Kondensationsprodukten mit Si-O-Si-Bindungen der vorstehend genannten Isocyanurate und Cyanurate und deren Mischungen.

Überraschend war, dass der Einsatz von 0,05 bis 2 Gew.-% der oben beschriebenen Komponente f), bezogen auf die Gesamtmasse der Siliconkautschukzusammensetzung, als Haftmittel in Polyorganosiloxanzusammensetzungen, die Phosphorsäureester und metallorganische Katalysatorsysteme enthalten, zu Siliconkautschukmischungen führt, die sofort nach dem Aushärtungsprozess und ohne Verwendung von Primern Haftung auf PMMA zeigen und die Lagerstabilität erhöhen. Im Gegensatz zum Stand der Technik kann hier auf den Gebrauch einer Haftmittelkombination aus drei Einzelkomponenten verzichtet werden. Auch der Einsatz von Hexamethyldisilazan ist nicht erforderlich. Die erfindungsgemäßen im Falle der zinnhaltigen Katalysatorsysteme transparenten, geruchslosen RTV-1K-Siliconkautschukmischungen zeichnen sich durch ein breites und verläßliches Haftspektrum auf Kunststoffen, wie z.B. Polyvinylchlorid, Polycarbonat und insbesondere diversen Sorten von PMMA aus.

Bei den erfindungs gemäß eingesetzten vernetzungsfähigen Polyorganosiloxanen (Komponente a) der Zusammensetzung handelt es sich vorzugsweise um solche der allgemeinen Formel 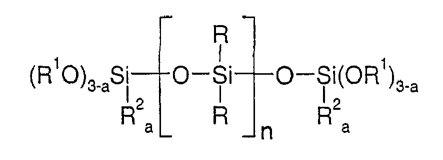
wobei die Substituenten R und R² jeweils unabhängig voneinander gegebenenfalls substituierte C₁-C₈-Alkyl-, C₆-C₁₄-Aryl- oder C₂-C₈-Alkenylgruppen sind und die Substituenten R¹ jeweils unabhängig voneinander Wasserstoff, gegebenenfalls substituiertes C₁-C₈-Alkyl, gegebenenfalls substituiertes C₁-C₈-Alkoxy(C₁-C₈)-alkyl, Poly(alkylenoxy)alkyl oder C₂-C₈-Alkenyl sind. Die Substituenten R¹, R² und R können gleich oder verschieden sein. Auch können die Substituenten R¹ in einem Molekül oder verschiedenen Molekülen gleich oder verschieden sein. Dies gilt auch für die Substituenten R² und R. n ist eine ganze Zahl errechnet aus dem Gewichtsmittel und kann bevorzugt Werte von 50 bis 2500 noch bevorzugter von 500 bis 2000 annehmen, während a = 0, 1 oder 2 ist.

Die oben genannten gegebenenfalls substituierten C₁-C₈-Alkylgruppen schließen lineare und verzweigte Alkylgruppen mit 1 bis 8 Kohlenstoffatomen ein: zum Beispiel Methyl, Ethyl, n-Propyl, iso-Propyl, n-Butyl, iso-Butyl, Pentyl, Hexyl, Heptyl, Octyl etc. Bevorzugt ist Methyl.

Substituenten der oben genannten gegebenenfalls substituierten C₁-C₈-Alkylgruppen schließen insbesondere Fluor ein, und Beipiele der substituierten Alkylgruppen sind beispielsweise Trifluorpropylreste, C₆F₁₃-ethylen, C₃F₅-O-propylen oder Fluoroxiranpropyloxy-propylen.

Die oben genannten gegebenenfalls substituierten C₆-C₁₄-Arylgruppen schließen aromatische Gruppen mit 6 bis 14 Kohlenstoffatomen ein, wie zum Beispiel Phenyl oder Naphthyl etc. Bevorzugt ist Phenyl.

Die oben genannten gegebenenfalls substituierten C₂-C₈-Alkenylgruppen schließen lineare und verzweigte Alkenylgruppen mit 2 bis 8 Kohlenstoffatomen ein: zum Beispiel Vinyl, Allyl, etc. Bevorzugt ist Vinyl.

Bevorzugt ist R eine Methylgruppe. R² ist bevorzugt Methyl. R¹ ist bevorzugt Methyl , Vinyl oder Wasserstoff.

Bevorzugte Alkylenoxygruppen in Poly(alkylenoxy)alkyl sind Ethylenoxy und Propylenoxy.

Solche vemetzungsfähige Polyorganosiloxane sind an sich im Stand der Technik bekannt und werden beispielsweise in oben genannten Patenten beschrieben.

Die erfindungsgemäß verwendeten vernetzungsfähigen Polyorganosiloxane weisen bevorzugt eine Viskosität von 0,1 bis 1000 Pa.s noch bevorzugter von 10 bis 200 Pa.s. bei 25 °C auf.

Es können ein oder mehrere Arten von Polyorganosiloxanen in der erfindunggemäßen Zusammensetzung verwendet werden.

Bei den erfindungsgemäß verwendeten vernetzungsfähigen Polyorganosiloxanen kann es sich um Polyorganoalkoxysiloxane (a = 0 oder 1) oder um *alpha, omega*-hydroxyl-terminierten Polyorganosiloxane (a = 2) handeln. Die vorstehend erwähnten Polyorganoalkoxysiloxane werden durch die Umsetzung von *alpha,omega-*hydroxyl-terminierten Polyorganosiloxanen (a = 2) mit mindestens zwei Äquivalenten eines Alkoxyvernetzer pro Molekül hergestellt. Bei dem Alkoxyvernetzer kann es sich um den unten beschriebenen, in der Zusammensetzung der Erfindung enthaltenen Alkoxyvernetzer handeln. Bevorzugt verwendet man bei der Herstellung der Polyorganoalkoxysiloxane einen Überschuss des Alkoxyvernetzers, der dann in der erfindungsgemäßen Zusammensetzung enthalten ist und dort als Vernetzer bei der Aushärtung dient. Beispiele für die Umsetzung von *alpha,omega-*hydroxyl-terminierten Polyorganosiloxanen mit Alkoxysilan-/siloxanvernetzern, der sogenannten Entstoppungreaktion, bei denen verschiedene Katalysatoren eingesetzt werden können, sind in EP 21 859, EP 69 256 (Amine als Katalysatoren), US 3,161,614 (Amine im Gemisch mit Metallcarboxylaten als Katalysatoren), EP 137 883 (Amine im Gemisch mit Lewis-Säuren als Katalysatoren), DE 3 523 206 (Ammoniumcarbamate als Katalysatoren) und EP 70 786 (Hydroxylaminderivate als Katalysatoren) sowie DE 195 33 915 (Phosphorsäureester) zu finden.

Die Menge der erfindungsgemäß verwendeten vernetzungsfähigen Polyorganosiloxane in der erfindungsgemäßen Zusammensetzung beträgt bevorzugt mindestens etwa 30 Gew.-%, noch bevorzugter mindestens etwa 40 Gew.-%. Maximal beträgt der Anteil etwa 99,3 Gew.-% bevorzugt etwa 85 Gew.-%, sodass sich folgende Vorzugsbereiche ergeben: von 30 Gew.-% bis 99,3 Gew.-%, bevorzugter von 40 Gew.-% bis 85 Gew.-%, jeweils bezogen auf die Gesamtmenge der erfindungsgemäßen Zusammensetzung.

Bei den erfindungsgemäß eingesetzten Alkoxysilan-/siloxanvernetzer handelt es sich vorzugsweise um eine Organosiliciumverbindung der Formel

R⁴_{b}Si(OR³)_{4-b}

wobei die Substituenten R⁴ jeweils unabhängig voneinander gegebenenfalls substituierte C₁-C₈-Alkyl-, C₆-C₁₄-Aryl- oder C₂-C₈-Alkenylgruppen darstellen, R³ eine gegebenenfalls substituierte C₁-C₈-Alkyl-, oder C₂-C₈-Alkenylgruppe darstellt und b eine ganze Zahl von 0, 1 oder 2 ist, sowie Kondensate davon. R³ und R⁴ können gleich oder verschieden voneinander sein. Bezüglich der Bedeutung der gegebenenfalls substituierten C₁-C₈-Alkyl-, C₁-C₈-Alkoxyalkyl, C₆-C₁₄-Aryl- oder C₂-C₈-Alkenylgruppe kann auf die zuvor gemachten Ausführungen zu den Polyorganosiloxanen verwiesen werden. Zusätzlich schließt gegebenenfalls substituiertes C₁-C₈-Alkyl ein: C₁-C₈-Alkoxy(C₁-C₈)-alkyl.

Besonders bevorzugt handelt es sich bei dem Alkoxysilan-/siloxanvernetzer um mindestens einen Bestandteil, der aus der Gruppe ausgewählt wird, die aus Tetraethoxysilan, Polykieselsäureester, Vinyltrialkoxysilanen, Methoxyethyltrialkoxysilanen und Methyltrialkoxysilanen besteht. Noch bevorzugter werden die Alkoxyvernetzer ausgewählt aus Methyltrimethoxysilan, Methyltriethoxysilan, Vinyltrimethoxysilan und/oder Vinyltriethoxysilan.

Es können ein oder mehrere Alkoxyvernetzer in der erfindungsgemäßen Zusammensetzung verwendet werden.

Die Menge der erfindungsgemäß verwendeten Alkoxysilan-/siloxanvernetzer in der erfindungsgemäßen Zusammensetzung beträgt bevorzugt mindestens etwa 0,3 Gew.-%, noch bevorzugter mindestens etwa 0,4 Gew.-%. Maximal beträgt der Anteil etwa 10 Gew.-% bevorzugt etwa 6 Gew.-%, so dass sich folgende Vorzugsbereiche ergeben: von 0,3 Gew.-% bis 10 Gew.-%, bevorzugter von 0,4 Gew.-% bis 6 Gew.-%, jeweils bezogen auf die Gesamtmenge der erfindungsgemäßen Zusammensetzung.

Die in den erfindungsgemäßen Polyorganosiloxanzusammensetzungen bzw. RTV-1K-Massen benutzten Aminoalkylsiloxane entsprechen bevorzugt der allgemeinen Formel

X-CH₂CH₂CH₂-Si(OR⁵)₃

worin X ausgewählt wird aus -NH₂ und/oder -NHCH₂CH₂NH₂
und die Substituenten R⁵ jeweils unabhängig voneinander gegebenenfalls substituierte C₁-C₈-Alkyl-, C₆-C₁₄-Aryl-, C₂-C₈-Alkenyl- oder Siloxangruppen darstellen. Bezüglich der Bedeutung der C₁-C₈-Alkyl-, C₆-C₁₄-Aryl-, C₂-C₈-Alkenylgruppen kann auf die vorstehenden Erläuterungen zu den Substituenten R, R¹ und R² verweisen werden.

Aminoalkylsiloxane in der vorstehenden Formel, in denen R⁵ eine Siloxangruppe darstellt, werden beispielsweise erhalten durch die Kondensation der genannten Verbindungen mit sich selbst unter Alkoholaustritt bzw. durch die Kondensation der genannten Verbindungen mit SiOH-funktionalisierten linearen oder verzweigten Polysiloxanen.

Weiterhin können Gemische von Aminoalkylsilanen verwendet werden.

Besonders bevorzugt werden Aminopropyltrialkoxysilane und *alpha,omega-*bis(diethoxy-3-propylamin)-terminierte Polydimethylsiloxane, und ganz besonders bevorzugt werden Aminopropyltrimethoxysilan, Aminopropyltriethoxysilan und *alpha, omega*-bis(diethoxy-3-propylamin)-terminiertes Dodecamethylhexasiloxan verwendet.

Die Menge der erfindungsgemäß verwendeten Aminoalkylsiloxane in der erfindungsgemäßen Zusammensetzung beträgt bevorzugt mindestens etwa 0,1 Gew.-%, noch bevorzugter mindestens etwa 0,2 Gew.-%. Maximal beträgt der Anteil etwa 30 Gew.-% bevorzugt etwa 20 Gew.-%, sodass sich folgende Vorzugsbereiche ergeben: von 0,1 Gew.-% bis 30 Gew.-%, bevorzugter von 0,2 Gew.-% bis 20 Gew.-%, jeweils bezogen auf die Gesamtmenge der erfindungsgemäßen Zusammensetzung.

Die erfindungsgemäß verwendeten Phosphorsäureestern und deren Salzen werden bevorzugt ausgewählt aus Mono-, Di- oder Triorthophosphorsäureestern sowie Polyphosphorsäureestern sowie deren Salze.

Bei den Mono-, Di- oder Triorthophosphorsäureestern handelt es sich bevorzugt um solche der Formel:

O=P(OR¹⁷)₃₋ₚ(OH)ₚ

wobei p 0, 1 oder 2 ,
R¹⁷ ausgewählt wird aus der Gruppe, die besteht aus: linearen oder verzweigten und gegebenenfalls substituierten C₁-C₃₀-Alkylgruppen, linearen oder verzweigten,C₅-C₁₄-Cycloalkylgruppen , C₆-C₁₄-Arylgruppen, C₆-C₃₁ Alkylarylgruppen, linearen oder verzweigten C₂-C₃₀-Alkenylgruppen oder linearen oder verzweigten C₁-C₃₀-Alkoxy(C₁-C₃₀)alkylgruppen, Polyalkenyloxygruppen (Polyether), Triorganylsilyl- und Dioroanyl(C₁-C₃₀)alkoxysilylgruppen.

Besonders bevorzugt ist p = 1 oder 2.
Bezüglich der in der Definition der vorstehend genannten Phosphorsäureverbindungen erwähnten C₁-C₃₀-Alkyl-, C₆-C₁₄-Aryl-, C₅-C₁₄-Cycloalkyl- , C₆-C₃₁ Alkylarylgruppen und/oder C₂-C₃₀-Alkenylgruppen C₁-C₃₀-Alkoxy(C₁-C₃₀)alkylgruppen, , Polyalkenyloxygruppen (Polyether) sowie Triorganyl-silyl- und Diorganyl(C₁-C₃₀)alkoxysilylgruppen. sei auf die nachstehenden Erläuterungen bezüglich des zinnhaltigen Katalysators verwiesen.

Wenn p = 1 oder 2 ist, können die Phosphorsäureester mit Basen unter Bildung von Salzen reagieren. Die Verwendung dieser Salze ist erfindungsgemäß möglich. Bevorzugt sind saure Phosphorsäureester und/oder saure Phosphorsäureestersalze. Saure Phosphorsäureestersalze schließen auch nichtstöchiometrische Umsetzungsprodukte von Phosphorsäureestern mit Basen ein. Basen, die bei der Umsetzung der sauren Phosphorsäureester verwendet werden können, schließen beispielsweise Hydroxide, Oxide, Carbonate von Alkali- und Erdalkalimetallen sowie Ammoniak und Mono-, Di- oder Trialkylamin und Tetraalkyl- und Arylalkylammoniumhydroxide ein. Insbesondere können auch die erfindungsgemäß verwendeten Aminoalkylsiloxane mit den sauren Phosporsäureestern beim Zusammengeben der Komponenten eine Reaktion eingehen.

Bevorzugt sind Monophosphorsäureester, worunter Monobutyl-, Monoisodecyl-, Mono-(2-ethylhexyl)-, Monoisononyl-, Monohexyl-, Monotridecyl-, Monooctadecyl-ester Mono- bzw. Diestergemische kurzkettiger alkylendgestoppter Polyether, wie Marlophor N5®, Phenylester oder Bis (trimethylsily)phosphorsäure und deren saure Salze besonders bevorzugt sind.

Die Menge der erfindungsgemäß verwendeten Phosphorsäureester in der erfindungsgemäßen Polyorganosiloxan-Zusammensetzung beträgt bevorzugt mindestens etwa 0,05 Gew.-%, noch bevorzugter mindestens etwa 1,0 Gew.-%. Maximal beträgt der Anteil etwa 10,0 Gew.-% bevorzugt etwa 6 Gew.-%, sodass sich folgende Vorzugsbereiche ergeben können: von 0,05 Gew.-% bis 10,0 Gew.-%, bevorzugter von 1,0 Gew.-% bis 6 Gew.-%, jeweils bezogen auf die Gesamtmenge der erfindungsgemäßen Zusammensetzung.

Die Menge des Phosphorsäureesters in der erfindungsgemäßen Polyorganosiloxan-Zusammensetzung beträgt ferner bevorzugt 0,5 bis 5 mol pro mol des zinnhaltigen Katalysators oder des Titanchelat-Katalysators.

Bei der Komponente d) der erfindungsgemäßen Zusammensetzung handelt es sich um mindestens einen zinnhaltigen Katalysator oder mindestens einen Titanchelat-Katalysator.

Bei dem zinnhaltigen Katalysator handelt es sich bevorzugt um eine Organozinnverbindung. Besonders bevorzugt handelt es sich um mindestens eine organische Zinnverbindung der Formel

R⁶₄₋ₘSnYₘ

wobei m 1, 2 oder 3 ist,
R⁶ ausgewählt wird aus der Gruppe, die besteht aus linearen oder verzweigten gegenenfalls substituierte C₁-C₃₀-Alkylgruppen-, C₅-C₁₄-Cycloalkylgruppen oder C₆-C₁₄-Arylgruppen, Triorganylsilyl- sowie Diorganyl(C₁-C₃₀)alkoxysilylgruppen sein und wenn eine Mehrzahl von Substituenten R⁶ vorliegt, diese gleich oder verschieden voneinander sein können, und Y ausgewählt wird aus der Gruppe, die besteht aus Halogen, -OR⁷, -OC(O)R⁸, -OH, -SR⁹, -NR¹⁰₂, -NHR¹¹, -OSiR¹²₃, -OSi(OR¹³)3,
worin die Substituenten R⁷ bis R¹³ jeweils unabhängig voneinander ausgewählt werden aus gegebenenfalls substituierten C₁-C₈-Alkyl-, C₆-C₁₄-Aryl- und/oder C₂-C₈-Alkenylgruppen,
und/oder Verbindungen der allgemeinen Formeln R¹⁴₂SnY', R¹⁵₃SnY'_{1/2} und/oder R¹⁶SnY'_{3/2} ist,
worin R^{14,} R¹⁵ und R¹⁶ jeweils unabhängig ausgewählt werden aus der Gruppe, die besteht aus linearen oder verzweigten C₁-C₃₀-Alkylgruppen-, C₅-C₁₄-Cycloalkylgruppen oder C₆-C₁₄-Arylgruppen und wenn eine Mehrzahl der genannten Substituenten im Molekül vorliegt, diese gleich oder verschieden voneinander sein können,
und Y' = O oder S ist.

Die in der Definition der vorstehend genannten organischen Zinnverbindungen erwähnten linearen oder verzweigten gegebenen falls substituierte C₁-C₃₀-Alkylgruppen schließen solche mit 1 bis 30 Kohlenstoffatomen ein, wie zum Beispiel Methyl, Ethyl, Chlorethyl, n-Propyl, iso-Propyl, n-Butyl, iso-Butyl, Pentyl, Hexyl, Heptyl, Ethylhexyl, Octyl, Decyl, Undecyl, Dodecyl, Tridecyl, etc. Bevorzugt ist Butyl, Hexyl oder Octyl.

Die in der Definition der vorstehend genannten organischen Zinnverbindungen erwähnten C₅-C₁₄-Cycloalkylgruppen schließen mono- oder polycyclische Alkylgruppen ein, wie zum Beispiel Cylopentyl, Cyclohexyl, Cyclohexylethyl Cyclooctyl, Decalinyl, Hydrindanyl, Bicyclo[2.2.1]heptanyl, Bicyclo[2.2.2]octanyl , Bicyclo[4.2.3] nonyl etc.
C₆-C₁₄-Arylgruppen umfassen z.B . Phenyl - und Naphthenyl, Fluorenylgruppen. Beispiele für C₆-C₃₁ Alkylarylgruppen sind Tolyl, Xylyl, 2,4-Di-tert.-butylphenylgruppen. C₂-C₃₀-Alkenylgruppen schließen Vinyl, Allyl, Octenyl, Cyclohexenylethyl, Nornbornenyl ein. Beispiele für C₁-C₃₀-Alkoxy(C₁-C₃₀)alkylgruppen sind Methoxy- bzw. Nonyloxy substituierte Ethyl, Butyl oder Hexylgruppen. Polyalkenyloxygruppen (Polyether) umfassen stellvertretend Ethyl- , Nonyl- oder Stearyl monoendgestoppte Polyethylenoxygruppen mit einem Polymerisationsgrad von 3-20.

Bezüglich der in der Definition der vorstehend genannten organischen Zinnverbindungen erwähnten C₁-C₈-Alkyl-, C₆-C₁₄-Aryl- und/oder C₂-C₈-Alkenylgruppen, sei auf die Erläuterungen zu diesen Substituentengruppen bei den vernetzbaren Polyorganosiloxanen verwiesen. Bevorzugte Zinnverbindungen sind Dioctylzinnoxid, Dibutylzinnoxid, Dimethylzinnoxid, Dimethylzinndichlorid, Dibutylzinndichlorid, Tributylzinnchlorid, Dibutylzinndilaurat, Dibutylzinndiacetat, Dibutylzinnmaleat, Dibutylzinndihexanoat, Dibutylzinndioctoat, Dioctylzinndioctoat, Dioctylzinndilaurat, Dioctyldibutoxystannan und/oder Tributylethoxystannan.

Ferner können als zinnhaltige Katalysatoren Umsetzungsprodukte der vorstehend beschiebenen Organozinnverbindungen mit einem oder mehreren Kieselsäureester, Polykieselsäureester, Organylalkoxysilan und/oder jeweils deren Teilhydrolysate verwendet werden.

Die Menge des zinnhaltigen Katalysators in der erfindungsgemäßen Polyorganosiloxan-Zusammensetzung beträgt bevorzugt mindestens etwa 0,2 Gew.-%, noch bevorzugter mindestens etwa 0,3 Gew.-%. Maximal beträgt der Anteil etwa 5 Gew.-% bevorzugt etwa 4 Gew.-%, sodass sich folgende Vorzugsbereiche ergeben: von 0,2 Gew.-% bis 5 Gew.-%, bevorzugter von 0,3 Gew.-% bis 4 Gew.-%, jeweils bezogen auf die Gesamtmenge der erfindungsgemäßen Zusammensetzung.

Die Titanchelat-Katalysatoren, die erfindungsgemäß verwendet werden können, sind an sich bekannt und sind beispielsweise beschrieben in US 4,680,364 US 3,689,454, US 3,334,067, DE 19 507 416 und US 4,438,039.

Die Menge des zinnhaltigen Katalysators oder des Titanchelatkatalysators in der erfindungsgemäßen Polyorganosiloxan-Zusammensetzung beträgt bevorzugt mindestens etwa 0,2 Gew.-%, noch bevorzugter mindestens etwa 0,3 Gew.-%. Maximal beträgt der Anteil etwa 5 Gew.-% bevorzugt etwa 4 Gew.-%, sodass sich folgende Vorzugsbereiche ergeben: von 0,2 Gew.-% bis 5 Gew.-%, bevorzugter von 0,3 Gew.-% bis 4 Gew.-%, jeweils bezogen auf die Gesamtmenge der erfindungsgemäßen Zusammensetzung.

Bevorzugt werden als Komponente d) der erfindungsgemäßen Zusammensetzung zinnhaltige Katalysatoren verwendet.

Die erfindungsgemäße Polyorganosiloxan-Zusammensetzung weist als Komponente f) 0,05 bis 2 Gew.-%, bezogen auf 100 Gew.-% der Zusammensetzung, mindestens einer Verbindung auf, ausgewählt aus der Gruppe, die besteht aus einem Isocyanurat der Formel 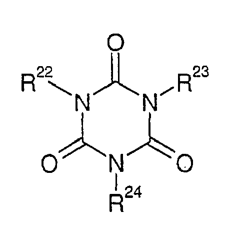
worin R²², R²³ und R²⁴ gleich oder verschieden voneinander sein können und jeweils unabhängig voneinander ausgewählt werden aus der Gruppe, die besteht aus Trisalkoxysilylalkyl und Alkenyl, mit der Maßgabe, dass mindestens einer der Substituenten R²², R²³ und R²⁴ eine Trisalkoxysilylalkylgruppe ist,
einem Cyanurat der Formel 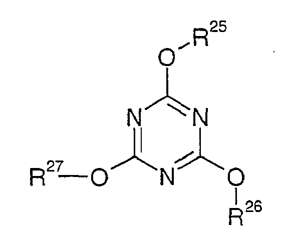
worin R²⁵, R²⁶ und R²⁷ gleich oder verschieden voneinander sein können und jeweils unabhängig voneinander ausgewählt werden aus der Gruppe, die besteht aus Trisalkoxysilylalkyl und Alkenyl, mit der Maßgabe, dass mindestens einer der Substituenten R²⁵, R²⁶ und R²⁷ eine Trisalkoxysilylalkylgruppe ist,
sowie Kondensationsprodukten mit Si-O-Si-Bindungen der vorstehend genannten Isocyanurate und Cyanurate und deren Mischungen.

Die Substituentengruppen R²² bis R²⁷ werden ausgewählt aus Trisalkoxysilylalkyl und/oder Alkenyl. Mindestens eine der in den oben genannten Formeln enthaltenen Substituentengruppen R²² bis R²⁴ bzw. R²⁵ bis R²⁷ ist eine Trisalkoxysilylalkylgruppe, noch bevorzugter sind alle der Substituentengruppen R²² bis R²⁴ bzw. R²⁵ bis R²⁷ Trisalkoxysilylalkylgruppen. Trisalkoxysilylalkyl schließt bevorzugt Gruppen der Formel -(CH₂)_{z}Si(OR²⁵)₃ ein, worin die Substituenten R²⁵ gleich oder verschieden voneinander sein können und jeweils unabhängig voneinander einen C₁-C₄-Alkylrest darstellen,
und z eine ganze Zahl von 3 bis 8, bevorzugt 3 ist.

C₁-C₄-Alkylreste schließen geradkettige oder verzweigte Alkylreste mit 1 bis 4 Kohlenstoffatomen ein, wie Methyl, Ethyl, Propyl, iso-Propyl, n-Butyl, sek.-Butyl, iso-Butyl und tert.-Butyl ein. Bevorzugt sind Methyl oder Ethyl.

Kondensationsprodukte mit Si-O-Si-Bindungen der vorstehend genannten Isocyanurate und Cyanurate und deren Mischungen werden erhalten durch Kondensation der Isocyanurate und Cyanurate und deren Mischungen an den Trisalkoxysilylfunktionen unter Einwirkung von Wasser und Abspaltung von Alkoholen unter Ausbildung der Si-O-Si-Bindungen.

Bevorzugte Tris[3-(trialkoxysilyl)alkyl]isocyanurate sind Tris[3-(trimethoxy- oder ethoxysilyl)propyl]isocyanurate und deren Kondensate. Bevorzugte Tris[3-(trialkoxysilyl)alkyl]cyanurate sind Tris[3-(trimethoxy- oder ethoxysilyl)propyl]cyanurate und deren Kondensate.

Bevorzugt beträgt die Konzentration der Komponente f) mindestens etwa 0,05 Gew.-% bevorzugter mindestens etwa 0,2 Gew.-%. Bevorzugt beträgt die Konzentration maximal etwa 1,6 Gew.-%, bevorzugter maximal etwa 1 Gew.-% , jeweils bezogen auf 100 Gew.-% der Zusammensetzung. Daraus ergeben sich als Vorzugsbereiche insbesondere 0,05 bis 1,6 Gew.-%, besonders bevorzugt 0,2 bis 1 Gew.-%, jeweils bezogen auf 100 Gew.-% der Zusammensetzung.

Zur Polyorganosiloxan-Zusammensetzung der Erfindung können neben den Komponenten a) bis f) weitere Komponenten gegeben werden. Dies sind insbesondere:
g) gegebenenfalls ein Füllstoff,
h) gegebenenfalls ein Hilfsstoff, wie zum Beispiel nicht vemetzungsfähige Siloxane, Haftmittel, Fungizide, Lösungsmittel, organische Farbstoffe, Pigmente etc.

Füllstoffe schließen beispielsweise ein: amorphe oder kristalline, verstärkende oder nicht verstärkende Kieselsäure, Silikate, Oxide, Carbonate. Für transparente Polyorganosiloxan-Zusammensetzungen kommen insbesondere pyrogene hydrophobe oder hydrophile Kieselsäuren mit BET-Oberflächen von 90 bis 400 m²/g in Frage.

Die Polyorganosiloxan-Zusammensetzung der Erfindung enthält bevorzugt:
a) 30 bis 99,3 Gew.-% mindestens ein vernetzungsfähiges Polyorganosiloxan,
b) 0,3 bis 10 Gew.-% mindestens einen Alkoxysilan-/siloxanvernetzer ,
c) 0,05 bis 10 Gew.-% mindestens einen Phosphorsäureester,
d) 0,2 bis 5 Gew.-% mindestens einen zinnhaltiger Katalysator oder mindetens einen Ti-chelat-haltigen Katalysator,
e) 0,1 bis 30 Gew.-% mindestens ein Aminoalkylsiloxan,
f) 0,05 bis 2 Gew.-%, bezogen auf 100 Gew.-% der Zusammensetzung, mindestens eine Verbindung ausgewählt aus der Gruppe, die besteht aus einem Isocyanurat der Formel 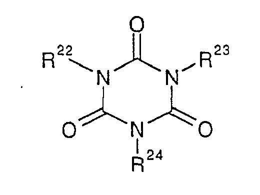
   worin R²², R²³ und R²⁴ gleich oder verschieden voneinander sein können und jeweils unabhängig voneinander ausgewählt werden aus der Gruppe, die besteht aus Trisalkoxysilylalkyl und Alkenyl, mit der Maßgabe, dass mindestens einer der Substituenten R²², R²³ und R²⁴ eine Trisalkoxysilylalkylgruppe ist,
   einem Cyanurat der Formel 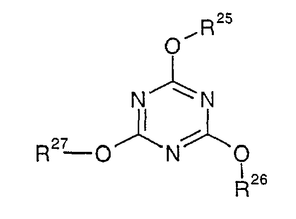
   worin R²⁵, R²⁶ und R²⁷ gleich oder verschieden voneinander sein können und jeweils unabhängig voneinander ausgewählt werden aus der Gruppe, die besteht aus Trisalkoxysilylalkyl und Alkenyl, mit der Maßgabe, dass mindestens einer der Substituenten R²⁵, R²⁶ und R²⁷ eine Trisalkoxysilylalkylgruppe ist,
   sowie Kondensationsprodukten mit Si-O-Si-Bindungen der vorstehend genannten Isocyanurate und Cyanurate und deren Mischungen,
g) 0 bis 60 Gew.-% eines Füllstoffes,
h) 0 bis 50 Gew.-% eines Hilfsstoff, ausgewählt aus nicht vernetzungsfähigen Siloxanen, Haftmitteln, Fungiziden, Lösungsmitteln und/oder Pigmenten.
Das Zusammengeben der vorstehend genannten Komponenten a) bis g) der Zusammensetzung der Erfindung kann zweckmäßig erfolgen, in dem man zunächst die Komponenten a), b) und c) zusammengibt und die übrigen Komponenten zu der Mischung von a), b) und c) hinzu gibt. In einer zweiten Ausführungsform kann a) mit e) bzw. e)+c) vor der Zugabe von b), gefolgt von g), h) sowie anschließend d) und f) zusammengegeben werden. Bevorzugt gibt man zu der Mischung von a), b) und c) als nächstes die Komponenten g) und h) und zu der so erhaltenen Mischung werden schließlich die Komponenten e) und d) und abschließend f) zugesetzt.

Wenn die Komponente a) ein Polyorganoalkoxysiloxan darstellt, können c) und d) auch in Form eines vorab hergestellten Umsetzungsproduktes nach dem Zusammengeben der Komponenten a) und b) der Mischung von a) und b) hinzugegeben werden.

Die Vorab-Umsetzung der Phosphorsäureester-Komponente c) und der Komponente d), insbesondere des zinnhaltigen Katalysators ist beispielsweise beschrieben in der DE-C1-19533963, auf die bezüglich weiterer Details verwiesen werden kann.

Zusammen mit der Zugabe der Komponente b) ist es zweckmäßig, eine geringe Mengen eines aliphatischen Alkohols, bevorzugt eines C₁-C₄-Alkanols, hinzuzugeben, um den Viskositätsanstieg durch die Reaktion der Komponenten a), b) und c) zu begrenzen.

Die erfindungsgemäßen Polyorganosiloxanzusammensetzungen bzw. RTV-1K-Massen können schrittweise im Batch-Prozess oder kontinuierlich mit der Hilfe von Extrudern hergestellt werden. Je nach Anwendung können die erfindungsgemäßen Massen standfest oder fließfähig sein.

Die Erfindung betrifft ferner die Zusammensetzung, die durch Vulkanisieren der Polyorganosiloxan-Zusammensetzung der Erfindung erhältlich ist. Vulkanisieren meint im Zusammenhang der Erfindung das Aushärten unter Vernetzung und gleichzeitiger Freisetzung von Alkoholen in Gegenwart von Feuchtigkeit oder Wasser.

Das Verfahren zum Vulkanisieren der erfindungsgemäßen Polyorganosiloxan-Zusammensetzung ist im allgemeinen dadurch gekennzeichnet, das man die Polyorganosiloxan-Zusammensetzung der Erfindung bei einer Temperatur von 0 bis 120°C in Kontakt mit Wasser kommen läßt. Wasser meint hier jegliche Arten von Wasser, insbesondere den Zutritt von Luftfeuchtigkeit beim Verarbeiten der Polyorganosiloxan-Zusammensetzung in an sich bekannter Weise.

Das Vulkanisieren der Polyorganosiloxan-Zusammensetzung der Erfindung wird in der Regel im Kontakt mit einem Substrat durchgeführt. Die Erfindung betrifft daher auch das durch das Vulkanisieren der Polyorganosiloxan-Zusammensetzung auf einem Substrat erhaltenene Verbundmaterial.

Geeignete Substrate schließen beispielsweise solche aus Metall, Metalloxiden, Glas, Kunststoffen, Pulverlacken bzw. Harzen und Keramik ein. Kunststoffe schließen beispielsweise ein: PVC, Polystyrol, Polyamide, Acrylbutadiene, Polyester, Polycarbonate, Urethane und Acrylate. Besonders bevorzugt wird die Polyorganosiloxan-Zusammensetzung der Erfindung auf Polyacrylaten insbesondere Polymethylmethacrylat angewendet.

Die Polyorganosiloxan-Zusammensetzung der Erfindung wird bevorzugt als Fugendichtstoff, Kleber, Beschichtungsmasse oder Formkörper verwendet.

Die Erfindung betrifft ferner die Verwendung einer Polyorganosiloxanzusammensetzung, die 0,05 bis 2 Gew.-% mindestens einer Verbindung ausgewählt aus der Gruppe, die besteht aus einem Isocyanurat der Formel 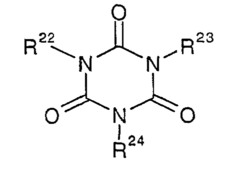
worin R²², R²³ und R²⁴ gleich oder verschieden voneinander sein können und jeweils unabhängig voneinander ausgewählt werden aus der Gruppe, die besteht aus Trisalkoxysilylalkyl und Alkenyl, mit der Maßgabe, dass mindestens einer der Substituenten R²² , R²³ und R²⁴ eine Trisalkoxysilylalkylgruppe ist,
einem Cyanurat der Formel 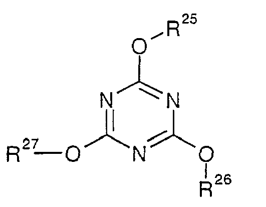
worin R²⁵, R²⁶ und R²⁷ gleich oder verschieden voneinander sein können und jeweils unabhängig voneinander ausgewählt werden aus der Gruppe, die besteht aus Trisalkoxysilylalkyl und Alkenyl, mit der Maßgabe, dass mindestens einer der Substituenten R²⁵, R²⁶ und R²⁷ eine Trisalkoxysilylalkylgruppe ist,
sowie Kondensationsprodukten mit Si-O-Si-Bindungen der vorstehend genannten Isocyanurate und Cyanurate und deren Mischungen, bezogen auf die Gesamtmenge der Polyorganosiloxanzusammensetzung, enthält, zur Anwendung auf Polymethylmethacrylatsubstraten.

### Beispiele:

Die folgenden Beispiele dienen der Erläuterung der Erfindung, ohne jedoch begrenzend zu wirken. Die Herstellung der transparenten, bei Raumtemperatur neutral vulkanisierende Polyorganosiloxanmassen erfolgte in der unten angegebene Reihenfolge in einem 1 Liter-Planetenmischem (z.B. Fa. Drais), entsprechend den nachfolgend aufgeführten Beispielen. Die einzelnen Bestandteile wurden im Abstand von 5 min bei Temperaturen zwischen 25-50 °C unter getrocknetem Stickstoff vermischt. Nach Abschluss der Herstellung befreite man die Mischung von eingeschlossenen Gasblasen, in dem man bei leichtem Vakuum weiterrührte. Anschließend wurden die Siloxanmassen in luftdicht verschließbare Kunststoffkartuschen aus HDPE mit einer durchschnittlichen Wandstärke von 1,2 mm bei Raumtemperatur gefüllt und gegebenfalls wie angegeben gelagert, um sie für die vergleichenden Untersuchungen bereitzustellen

### Beispiel 1:

Es wurde eine Siliconkautschukmischung gemäß folgender Formulierung hergestellt.

### Formulierung A:

1) 56,2 Gew.-Teile eines *alpha,omega*-hydroxyl-terminierten Polydimethylsiloxans, welches sich durch eine Viskosität von 80 Pa.s bei 25 °C Schergeschwindigkeitsgefälle D= 1 s⁻¹ auszeichnet.
2) 28,4 Gew.-Teile eines eines *alpha,omega-*trimethyl-terminierten Polydimethylsiloxans, welches sich durch eine Viskosität von 100 mPa·s bei 25 °C Schergeschwindigkeitsgefälle D= 1 s⁻¹ auszeichnet
3) 2,9 Gew.-Teile Methyltrimethoxysilan (MTMS)
4) 0,2 Gew.-Teile Methanol.
5) 0,25 Gew.-Teile Mono-2-ethylhexylphosphorsäureester
6) 10,3 Gew.-Teile hydrophobe Kieselsäure, die unter der Bezeichnung Aerosil® R 972 von der Firma Degussa-Hüls gezogen wurde.
7) 1,4 Gew.-Teile eines *alpha,*o*mega*-bis(diethoxy-3-propylamin)-terininierten Dodecamethylhexasiloxans
8) 0,4 Gew.-Teile einer Umsetzung aus Dioctylzinnoxid und Tetrapropylsilicat (im Verhältnis 45 zu 55 Gew.-Teile)
8) 0,2 Gew.-Teile Tris[3-(trimethoxysilyl)propyl]isocyanurat bzw. für die anderen Beispiele äquivalenten Haftsilane mit den Formulierungen C bis J

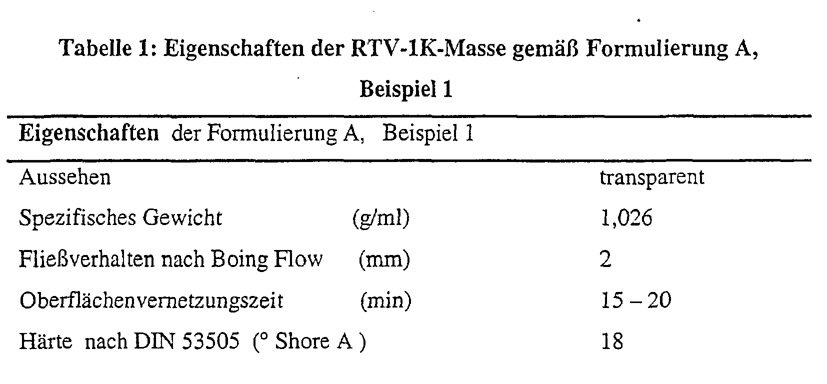

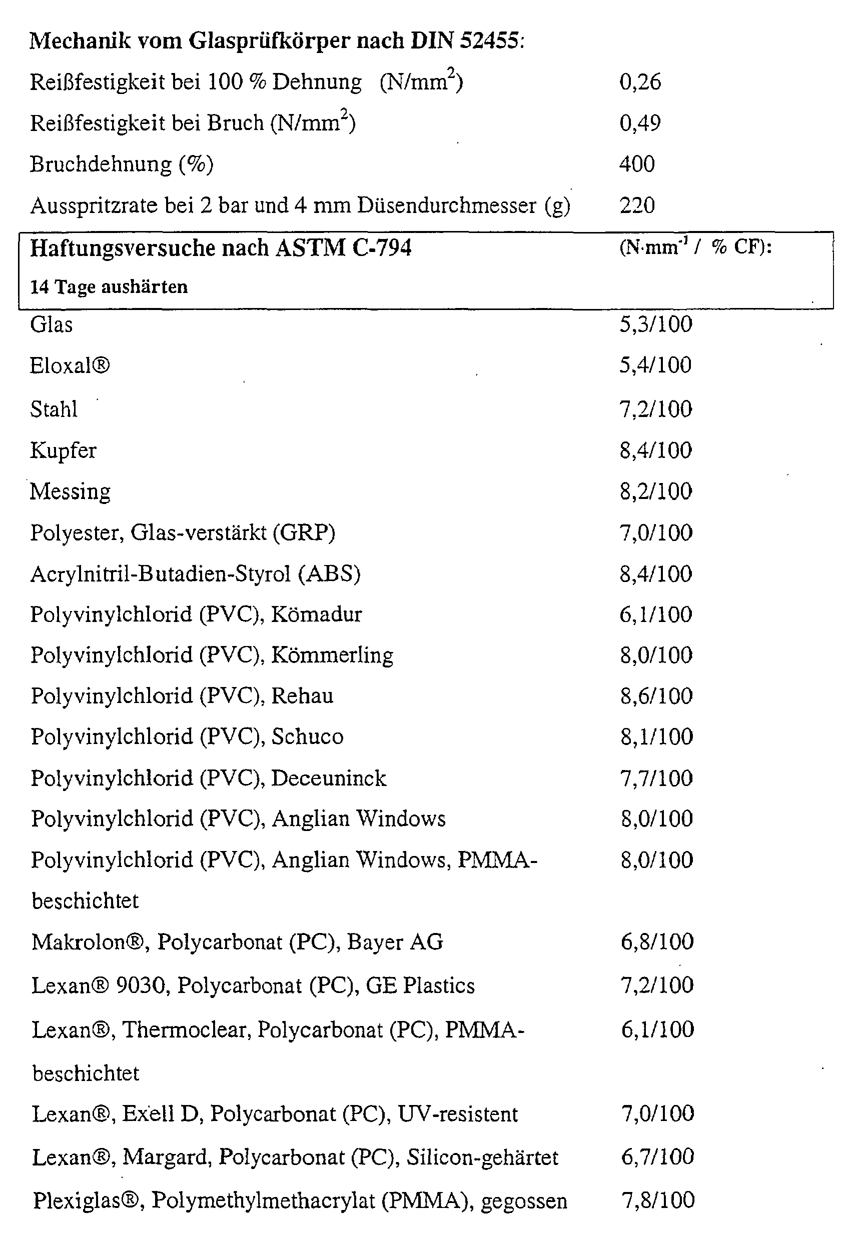

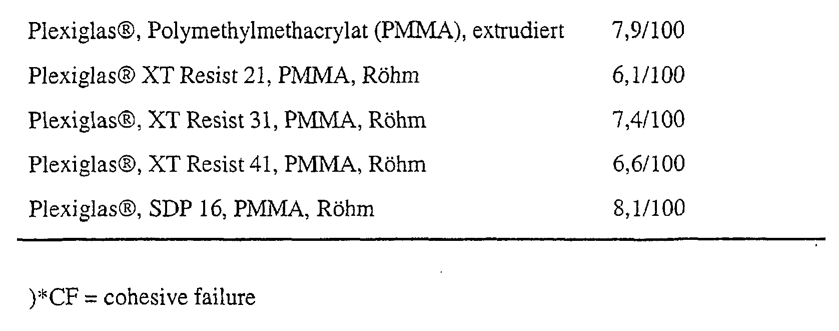

### Vergleichsbeispiel 1A - 1J

Zum Vergleich wurden weiterhin Siliconkautschukmischungen gemäß Formulierung A hergestellt, die jedoch anstelle von 0,2 Gew.-Teilen Tris[3-(trimethoxysilyl)propyl]isocyanurat 0,2 Gew.-Teile eines anderen Haftmittels (Tabelle 2) enthalten. Diese Formulierungen werden mit C, D, E, F, G, H, I und J bezeichnet.
Die in den Beispielen 1A und 1B hergestellten Massen werden nach einer Lagerzeit von 15 Monaten 23°C (Raumtemperatur) den Kartuschen entnommen. Auf einer Glasplatte formt man eine 4 mm dicke Testplatte durch Ausstreichen mit einem Rakel, lagert diese 3 Tage im Normklima (Raumtemperatur, 50 % relative Luftfeuchte) und läßt sie unter diesen Bedingungen vernetzen.
Während die Masse aus Beispiel 1A unter Einwirkung von Umgebungsluft (Normklima) vollständig durchhärtet, bleibt die Masse aus Beispiel 1B plastisch bzw. klebrig unvernetzt. Selbst nach einer Lagerzeit von 18 Monaten bei 23°C vernetzt die Masse aus Beispiel 1A als 4 mm dicke Tesplatte während 3 Tagen im Normklima noch vollständig zu einem elastomeren Formkörper.
Der Komponente f) verbessert, wie Beispiel 1A zeigt, nicht nur die Haftung, sondern verlängert die Lagerzeit für die erfindungsgemäße Siliconkautschukmischung.

**Tabelle 2: Eingesetzte Haftmittel**

| Formulierung: | Eingesetztes Haftmittel: |
|---|---|
| A | Tris[3-(trimethoxysilyl)propyl]isocyanurat (Erfindung) |
| B | ohne Haftmittelzusatz |
| C | *Gamma-*Aminopropyltriethoxysilan |
| D | N-(*beta-*Aminoethyl)-*gamma*-aminopropyltrimethoxysilan |
| E | Bis[*gamma-*(trimethoxysilyl)propyl]amin |
| F | Aminosilan-modifiziertes Polydimethylsiloxan |
| G | *Gamma*-Metharyloxypropyltrimethoxysilan |
| H | *Gamma*-Glycidyloxypropyltrimethoxysilan |
| I | *Gamma-*Isocyanatopropyltriethoxysilan |
| J | *Gamma*-Ureidopropyltrimethoxysilan |

ASTM (American Society for Testing and Materials) C-794 Haftungsversuche der in Tabelle 2 genannten Formulierungen wurden auf Plexiglas® (Polymethylmethacrylat, extrudiert) nach 14 Tagen Aushärtung in einem Klimaraum (Raumtemperatur, 50 % relative Luftfeuchtigkeit) sowie nach 14 Tagen Aushärtung in einem Klimaraum (Raumtemperatur, 50 % relative Luftfeuchtigkeit) mit anschließender Wasserlagerung (Raumtemperatur, 3 Tage) durchgeführt. Akzeptable ASTM C-794 Haftungswerte werden dadurch definiert, dass der Quotient aus Kraft pro Weg >2,6 N·mm⁻¹ mit CF (cohesive failure)>90 % ist. Hierbei bedeutet CF der prozentuale Flächeninhalt des Substrats, an dem nach dem Zugversuch Dichtstoff verblieben ist. Wie Tabelle 3 zu entnehmen ist, zeigt nur die Formulierung A (Einsatz von 0,2 Gew.-Teilen Tris[3-(trimethoxysilyl)propyl]isocyanurat) sofort nach der Vulkanisation und ohne den Einsatz von Primern Haftung auf Plexiglas® (Polymethylmethacrylat, extrudiert).

**Tabelle 3: Haftungsversuche der MTMS-Versuchsreihe**

| Haftungsversuche nach ASTM C-794 (N·mm⁻¹ / % CF) | | |
|---|---|---|
| Formulierung: | 14 Tage Aushärten | 14 Tage Aushärten/3 Tage Wasser |
| A (Erfindung) | 7,4/100 | 7,2/100 |
| B | 0/0 | 0/0 |
| C | 0/0 | 0/0 |
| D | 0/0 | 0/0 |
| E | 0/0 | 0/0 |
| F | 0/0 | 0/0 |
| G | 0/0 | 0/0 |
| H | 0/0 | 0/0 |
| I | 0/0 | 0/0 |
| J | 0/0 | 0/0 |

### Vergleichsbeispiel 2 A - 2-J :

RTV-1K-Siliconkautschukmischungen, die auf den Formulierungen aus Vergleichsbeispiel 1 basierten, jedoch anstelle von 2,9 Gew.-Teilen Methyltrimethoxysilan (MTMS) 2,9 Gew.-Teile Vinyltrimethoxysilan (VTMO) enthalten, wurden hergestellt. Die ASTM C-794 Haftungsergebnisse auf Plexiglas® (Polymethylmethacrylat, extrudiert) dieser Formulierungen sind in Tabelle 4 zusammengetragen.

**Tabelle 4: Haftungsversuche der VTMO-Versuchsreihe**

| Haftungsversuche nach ASTM C-794 (N·mm⁻¹ / % CF) | | |
|---|---|---|
| Formulierung: | 14 Tage Aushärten | 14 Tage Aushärten/3 Tage Wasser |
| A (Erfindung) | 7,0/100 | 7,2/100 |
| B | 0/0 | 0/0 |
| C | 0/0 | 0/0 |
| D | 0/0 | 0/0 |
| E | 0/0 | 0/0 |
| F | 0/0 | 0/0 |
| G | 0/0 | 0/0 |
| H | 0/0 | 0/0 |
| I | 0/0 | 0/0 |
| J | 0/0 | 0/0 |

### Beispiel 2:

Gemäß Beispiel 1 wurden Siliconkautschukmischungen mit verschiedenen Gew.-Teilen des Tris[3-(trimethoxysilyl)propyl]isocyanurats hergestellt. Dabei wurde das Isocyanurat von 0,05 bis 3,50 Gew.-Teilen variiert, die Haftung der resultierenden RTV-1K-Mischungen auf extrudiertem PMMA getestet sowie ihre Durchhärtung überprüft. Zur Bestimmung der Durchhärtung wurde jeweils ein 4 mm dickes Probenfell auf einer Glasplatte ausgezogen und nach einem Tag Aushärtung im Normklima (Raumtemperatur, 50 % relative Luftfeuchtigkeit) die Durchhärtung auf der Unterseite des Felles überprüft. Das Probenfell galt als durchgehärtet, wenn die Unterseite weder klebrig noch plastisch war. Die Ergebnisse sind in Tabelle 5 dargestellt. Bei einer Verwendung von 0,05 Gew.-Teilen des Tris[3-(trimethoxysilyl)propyl]isocyanurats in der RTV-1K-Masse wird keine Haftung auf extrudiertem PMMA beobachtet, während Konzentrationen oberhalb 0,05 Gew.-Teile transparente Massen mit guten Durchhärtungseigenschaften liefern. Zusätze von Tris[3-(trimethoxysilyl)propyl]isocyanuratkonzentrationen oberhalb von 1,00 Gew.-Teile verringern die maximal mögliche Haftung des ausgehärteten Materials auf Plexiglas® (Polymethylmethacrylat, extrudiert), ab 1,60 Gew.-Teile beobachtet man zusätzlich mangelnde Durchhärtung und eine weißliche Verfärbung der Massen.

**Tabelle 5: Konzentrationsreihe des Tris[3-(trimethoxysilyl)propyl]isocyanurats**

| | | | |
|---|---|---|---|
| Konzentration | 9) Haftung auf PMMA gemäß ASTM C-794 (% CF) 14Tage aushärten | Durchhärtung | Eigenschaften |
| 0,05 | 0 | in Ordnung | transparent |
| 0,15 | 100 | in Ordnung | transparent |
| 0,20 | 100 | in Ordnung | transparent |
| 0,30 | 100 | in Ordnung | transparent |
| 0,40 | 100 | in Ordnung | transparent |
| 0,50 | 100 | in Ordnung | transparent |
| 1,00 | 80 | in Ordnung | milchig |
| 1,60 | 80 | Keine | milchig, klebrig |
| 2,00 | 10 | Keine | weiß, klebrig |
| 3,50 | 0 | Keine | weiß, klebrig |

### Vergleichsbeispiel 3:

Es wurde eine Siliconkautschukmischung gemäß Beispiel 1 mit der Abänderung hergestellt, dass 0,2 Gew.-Teile Tris[3-(trimethoxysilyl)propyl]isocyanurat entsprechend Variante B weggelassen wurden. Die resultierende RTV-1K-Masse zeigt weder auf PMMA der Tab. 3 noch auf den folgenden Substraten keine Haftung:
1. Polyvinylchlorid (PVC), Kömadur
2. Polyvinylchlorid (PVC), Kömmerling
3. Polyvinylchlorid (PVC), Schuco
4. Lexan®, Thermoclear, Polycarbonat (PC), PMMA-beschichtet
5. Plexiglas®, Polymethylmethacrylat (PMMA), gegossen
6. Plexiglas®, Polymethylmethacrylat (PMMA), extrudiert
7. Plexiglas® XT Resist 21, PMMA, Röhm
8. Plexiglas®, XT Resist 31, PMMA, Röhm
9. Plexiglas®, XT Resist 41, PMMA, Röhm
10. Plexiglas®, SDP 16, PMMA, Röhm

### Vergleichsbeispiel 4:

Es wurde eine Siliconkautschukmischung entsprechend Vergleichsbeispiel 2 A, d.h. mit der Abänderung , dass die Grundmischung für die Beispiele 2 ohne 0,2 Gew.-Teile Tris[3-(trimethoxysilyl)propyl]isocyanurat entsprechend 2B hergestellt wurde. Die resultierende RTV-1K-Masse zeigt weder auf PMMA der Tab. 4 noch auf den folgenden Substraten keine Haftung:
1. Polyvinylchlorid (PVC), Kömadur
2. Polyvinylchlorid (PVC), Kömmerling
3. Polyvinylchlorid (PVC), Schuco
4. Lexan®, Thermoclear, Polycarbonat (PC), PMMA-beschichtet
5. Plexiglas®, Polymethylmethacrylat (PMMA), gegossen
6. Plexiglas®, Polymethylmethacrylat (PMMA), extrudiert
7. Plexiglas® XT Resist 21, PMMA, Röhm
8. Plexiglas®, XT Resist 31, PMMA, Röhm
9. Plexiglas®, XT Resist 41, PMMA, Röhm
10. Plexiglas®, SDP 16, PMMA, Röhm

## Patentansprüche

1. Polyorganosiloxan-Zusammensetzung, erhältlich durch Zusammengeben der folgenden Komponenten:
a) mindestens ein vernetzungsfähiges Polyorganosiloxan,
b) mindestens ein Alkoxysilan-/siloxanvernetzer,
c) mindestens ein Phosphorsäureester und/oder ein Salz davon,
d) mindestens ein zinnhaltiger oder mindestens ein Titanchelat-haltiger Katalysator,
e) mindestens ein Aminoalkylsiloxan,
f) 0,05 bis 2 Gew.-%, bezogen auf 100 Gew.-% der Zusammensetzung, mindestens eine Verbindung ausgewählt aus der Gruppe, die besteht aus einem Isocyanurat der Formel 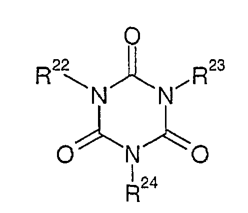
worin R²², R²³ und R²⁴ gleich oder verschieden voneinander sein können und jeweils unabhängig voneinander ausgewählt werden aus der Gruppe, die besteht aus Trisalkoxysilylalkyl und Alkenyl, mit der Maßgabe, dass mindestens einer der Substituenten R²², R²³ und R²⁴ eine Trisalkoxysilylalkylgruppe ist,
einem Cyanurat der Formel 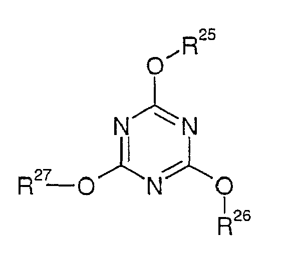
worin R²⁵, R²⁶ und R²⁷ gleich oder verschieden voneinander sein können und jeweils unabhängig voneinander ausgewählt werden aus der Gruppe, die besteht aus Trisalkoxysilylalkyl und Alkenyl, mit der Maßgabe, dass mindestens einer der Substituenten R²⁵, R²⁶ und R²⁷ eine Trisalkoxysilylalkylgruppe ist, sowie Kondensationsprodukten mit Si-O-Si-Bindungen der vorstehend genannten Isocyanurate und Cyanurate und deren Mischungen.
g) gegebenenfalls eines Füllstoffes
h) gegebenenfalls eines Hilfsstoffes, ausgewählt aus nicht vernetzungsfähigen Siloxanen, Haftmitteln, Fungiziden, Lösungsmitteln eines organischen Farbstoffes und/oder Pigmenten.

2. Polyorganosiloxan-Zusammensetzung nach Anspruch 1, **dadurch gekennzeichnet, dass** die Menge der genannten Komponente f) 0,05 bis 1,6 Gew.-%, bevorzugt 0,2 bis 1 Gew.-%, bezogen auf 100 Gew.-% der Zusammensetzung, beträgt.

3. Polyorganosiloxan-Zusammensetzung nach Anspruch 1 oder 2, **dadurch gekennzeichnet, dass** das vernetzungsfähige Polyorganosiloxan eine Viskosität von 0,1 bis 1000 Pa·s bei 25 °C besitzt.

4. Polyorganosiloxan-Zusammensetzung nach einem oder mehreren der Ansprüche 1 bis 3, **dadurch gekennzeichnet, dass** der Alkoxysilan-/siloxanvernetzer mindestens ein Bestandteil ist, der aus der Gruppe ausgewählt wird, die aus Vinyltrialkoxysilan, Methoxyethyltrialkoxysilan, Methyltrialkoxysilan und Tetraalkoxysilan besteht.

5. Polyorganosiloxan-Zusammensetzung nach einem oder mehreren der Ansprüche 1 bis 4, **dadurch gekennzeichnet, dass** sie erhältlich ist durch Zusammengeben der folgenden Komponenten:
a) 30 bis 99,3 Gew.-% mindestens eines vernetzungsfähigen Polyorganosiloxanes,
b) 0,3 bis 10 Gew.-% mindestens eines Alkoxysilan-/siloxanvernetzers ,
c) 0,05 bis 10 Gew.-% mindestens eines Phosphorsäureesters,
d) 0,2 bis 5 Gew.-% mindestens eines zinnhaltigen oder Ti-chelat- haltigen Katalysators,
e) 0,1 bis 30 Gew.-% mindestens eines Aminoalkylsiloxanes,
f) 0,05 bis 2 Gew.-%, bezogen auf 100 Gew.-% der Zusammensetzung, mindestens einer Verbindung ausgewählt aus der Gruppe, die besteht aus einem Isocyanurat der Formel 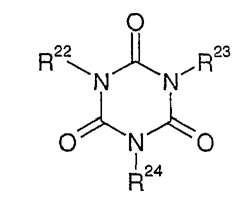
worin R²², R²³ und R²⁴ gleich oder verschieden voneinander sein können und jeweils unabhängig voneinander ausgewählt werden aus der Gruppe, die besteht aus Trisalkoxysilylalkyl und Alkenyl, mit der Maßgabe, dass mindestens einer der Substituenten R²², R²³ und R²⁴ eine Trisalkoxysilylalkylgruppe ist,
einem Cyanurat der Formel 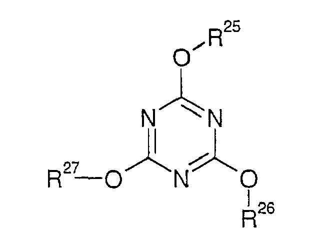
worin R²⁵, R²⁶ und R²⁷ gleich oder verschieden voneinander sein können und jeweils unabhängig voneinander ausgewählt werden aus der Gruppe, die besteht aus Trisalkoxysilylalkyl und Alkenyl, mit der Maßgabe, dass mindestens einer der Substituenten R²⁵, R²⁶ und R²⁷ eine Trisalkoxysilylalkylgruppe ist,
sowie Kondensationsprodukten mit Si-O-Si-Bindungen der vorstehend genannten Isocyanurate und Cyanurate und deren Mischungen,
g) 0 bis 60 Gew.-% eines Füllstoffes,
h) 0 bis 50 Gew.-% eines Hilfsstoffes, ausgewählt aus nicht vernetzungsfähigen Siloxanen, Haftmitteln, Fungiziden, Lösungsmitteln, eines organischen Farbstoffes und/oder Pigmenten.

6. Zusammensetzung, die durch Vulkanisieren einer Polyorganosiloxan-Zusammensetzung nach einem oder mehreren der Ansprüche 1 bis 5 erhältlich ist.

7. Verbundmaterial, enthaltend ein Substrat und die Zusammensetzung nach Anspruch 6.

8. Verfahren zum Vulkanisieren einer Polyorganosiloxan-Zusammensetzung nach einem oder mehreren der Ansprüche 1 bis 5, **dadurch gekennzeichnet**, das man die genannte Polyorganosiloxan-Zusammensetzung bei einer Temperatur von 0 bis 120 °C in Kontakt mit Wasser kommen läßt.

9. Verwendung einer Polyorganosiloxan-Zusammensetzung nach einem oder mehreren der Ansprüche 1 bis 5 als Fugendichtstoff, Kleber, Beschichtungsmasse oder Formkörper.

10. Verwendung einer Polyorganosiloxanzusammensetzung, die 0,05 bis 2 Gew.-% mindestens einer Verbindung ausgewählt aus der Gruppe, die besteht aus einem Isocyanurat der Formel 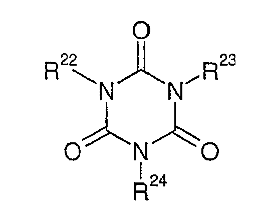
worin R²² , R²³ und R²⁴ gleich oder verschieden voneinander sein können und jeweils unabhängig voneinander ausgewählt werden aus der Gruppe, die besteht aus Trisalkoxysilylalkyl und Alkenyl, mit der Maßgabe, dass mindestens einer der Substituenten R²², R²³ und R²⁴ eine Trisalkoxysilylalkylgruppe ist,
einem Cyanurat der Formel 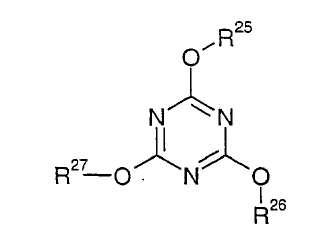
worin R²⁵, R²⁶ und R²⁷ gleich oder verschieden voneinander sein können und jeweils unabhängig voneinander ausgewählt werden aus der Gruppe, die besteht aus Trisalkoxysilylalkyl und Alkenyl, mit der Maßgabe, dass mindestens einer der Substituenten R²⁵, R²⁶ und R²⁷ eine Trisalkoxysilylalkylgruppe ist,
sowie Kondensationsprodukten mit Si-O-Si-Bindungen der vorstehend genannten Isocyanurate und Cyanurate und deren Mischungen, bezogen auf die Gesamtmenge der Polyorganosiloxanzusammensetzung, enthält, zur Anwendung auf Polymethylmethacrylatsubstraten.

## Claims

1. Polyorganosiloxane composition obtainable by combining the following components:
a) at least one crosslinkable polyorganosiloxane;
b) at least one alkoxysilane/siloxane crosslinking agent;
c) at least one phosphoric acid ester and/or a salt thereof;
d) at least one catalyst containing tin or at least one catalyst containing a titanium chelate;
e) at least one aminoalkylsiloxane;
f) 0.05 to 2 wt % based on 100 wt % of the composition of at least one compound selected from the group consisting of an isocyanurate of the formula: 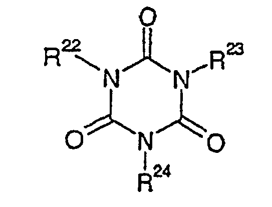
where R²², R²³ and R²⁴ may be the same or different and each is selected independently of the others from the group consisting of trisalkoxysilylalkyl and alkenyl, with the proviso that at least one of the substituents R²², R²³ and R²⁴ is a trisalkoxysilylalkyl group,
a cyanurate of the formula: 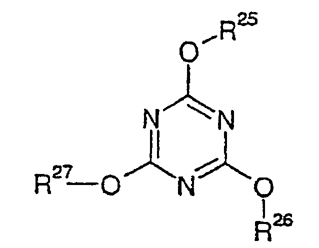
where R²⁵, R²⁶ and R²⁷ may be the same or different and each is selected independently of the others from the group consisting of trisalkoxysilylalkyl and alkenyl, with the proviso that at least one of the substituents R²⁵, R²⁶ and R²⁷ is a trisalkoxysilylalkyl group,
as well as condensation products having Si-O-Si bonds of the cyanurates and isocyanurates listed above as well as mixtures thereof.
g) optionally a filler;
h) optionally an auxiliary substance selected from non-crosslinkable siloxanes, adhesion promoters, fungicides, solvents, organic dyes and/or pigments.

2. Polyorganosiloxane composition according to Claim 1, **characterized in that** the amount of said component f) is 0.05 to 1.6 wt %, preferably 0.2 to 1 wt % based on 100 wt % of the composition.

3. Polyorganosiloxane composition according to claim 1 or 2, **characterized in that** the crosslinkable polyorganosiloxane has a viscosity of 0.1 to 1000 Pa·s at 25°C.

4. Polyorganosiloxane composition according to one or more of Claims 1 to 3, **characterized in that** the alkoxysilane/siloxane crosslinking agent is at least one component selected from the group consisting of vinyltrialkoxysilane, methoxyethyltrialkoxysilane, methyltrialkoxysilane and tetraalkoxysilane.

5. Polyorganosiloxane composition according to one or more of Claims 1 to 4, **characterized in that** it is obtainable by combining the following components:
a) 30 to 99.3 wt % of at least one crosslinkable polyorganosiloxane;
b) 0.3 to 10 wt % of at least one alkoxysilane/siloxane crosslinking agent;
c) 0.05 to 10 wt % of at least one phosphoric acid ester;
d) 0.2 to 5 wt % of at least one catalyst containing tin or a titanium chelate;
e) 0.1 to 30 wt % of at least one aminoalkylsiloxane;
f) 0.05 to 2 wt %, based on 100 wt % of the composition, of at least one compound selected from the group consisting of an,isocyanurate of the formula 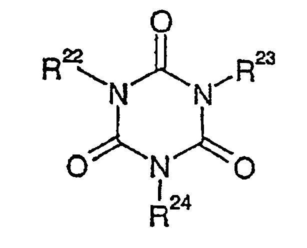
where R²², R²³ and R²⁴ may be the same or different and each is selected independently of the others from the group consisting of trisalkoxysilylalkyl and alkenyl, with the proviso that at least one of the substituents R²², R²³ and R²⁴ is a trisalkoxysilylalkyl group,
a cyanurate of the formula 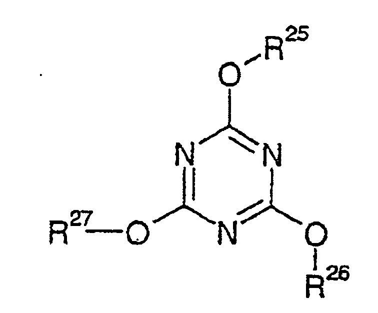
where R²⁵, R²⁶ and R²⁷ may be the same or different and each is selected independently of the others from the group consisting of trisalkoxysilylalkyl and alkenyl, with the proviso that at least one of the substituents R²⁵, R²⁶ and R²⁷ is a trisalkoxysilylalkyl group,
as well as condensation products with Si-O-Si bonds of the cyanurates and isocyanurates listed above as well as mixtures thereof;
g) 0 to 60 wt % of a filler;
h) 0 to 50 wt % of an auxiliary substance selected from non-crosslinkable siloxanes, adhesion promoters, fungicides, solvents, organic dyes and/or pigments.

6. Composition obtainable by vulcanizing a polyorganosiloxane composition according to one or more of Claims 1 to 5.

7. Composite material containing a substrate and the composition according to Claim 6.

8. Method of vulcanizing a polyorganosiloxane composition according to one or more of Claims 1 to 5, **characterized in that** said polyorganosiloxane composition is brought in contact with water at a temperature of 0 to 120°C.

9. Use of a polyorganosiloxane composition according to one or more of Claims 1 to 5 as a joint sealant, adhesive, coating compound or moulding.

10. Use of a polyorganosiloxane composition containing 0.05 to 2 wt % of at least one compound selected from the group consisting of an isocyanurate of the formula 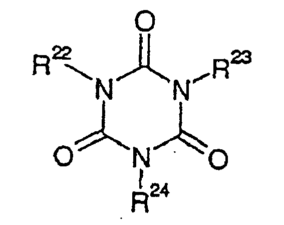
where R²², R²³ and R²⁴ may be the same or different and each is selected independently of the others from the group consisting of trisalkoxysilylalkyl and alkenyl, with the proviso that at least one of the substituents R²², R²³ and R²⁴ is a trisalkoxysilylalkyl group,
a cyanurate of the formula 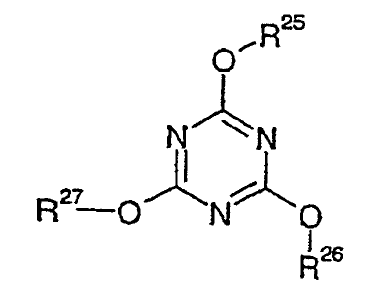
where R²⁵, R²⁶ and R²⁷ may be the same or different and each is selected independently of the others from the group consisting of trisalkoxysilylalkyl and alkenyl, with the proviso that at least one of the substituents R²⁵, R²⁶ and R²⁷ is a trisalkoxysilylalkyl group,
as well as condensation products with Si-O-Si bonds of the cyanurates and isocyanurates listed above as well as mixtures thereof, based on the total amount of the polyorganosiloxane composition, for use on polymethyl methacrylate substrates.

## Revendications

1. Composition de polyorganosiloxane pouvant être obtenue par mélange des composants suivants :
(a) au moins un polyorganosiloxane susceptible de réticulation,
(b) au moins un réticulant alcoxysilane/siloxane,
(c) au moins un ester d'acide phosphorique et/ou un sel de celui-ci,
(d) au moins un catalyseur contenant de l'étain ou au moins un catalyseur contenant un chélate du titane,
(e) au moins un aminoalkylsiloxane,
(f) 0,05 à 2 % en masse, pour 100 % en masse de composition, d'au moins un composé choisi dans le groupe qui consiste en un isocyanurate de formule 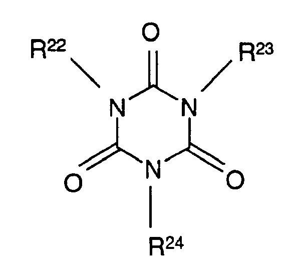
où R²², R²³ et R²⁴ peuvent être identiques ou différents les uns des autres et sont choisis dans chaque cas indépendamment les uns des autres dans le groupe qui consiste en trisalcoxysilylalkyle et alcényle, avec la condition qu'au moins l'un des substituants R²², R²³ et R²⁴ soit un groupe trisalcoxysilylalkyle,
un cyanurate de formule 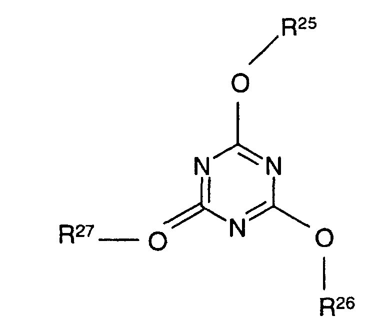
où R²⁵, R²⁶ et R²⁷ peuvent être identiques ou différents les uns des autres et sont choisis dans chaque cas indépendamment les uns des autres dans le groupe qui consiste en trisalcoxysilylalkyle et alcényle, avec la condition qu'au moins l'un des substituants R²⁵, R²⁶ et R²⁷ soit un groupe trisalcoxysilylalkyle,
ainsi que les produits de condensation avec des liaisons Si-O-Si des isocyanurates et cyanurates cités précédemment et leurs mélanges,
(g) éventuellement une charge,
(h) éventuellement un adjuvant choisi parmi les siloxanes non susceptibles de réticulation, les promoteurs d'adhésion, les fongicides, les solvants d'un colorant et/ou pigment organique.

2. Composition de polyorganosiloxane selon la revendication 1, **caractérisée en ce que** la quantité du composant f) cité est 0,05 à 1,6 % en masse, de préférence 0,2 à 1 % en masse, pour 100 % en masse de composition.

3. Composition de polyorganosiloxane selon la revendication 1 ou 2, **caractérisée en ce que** le polyorganosiloxane susceptible de réticulation possède une viscosité de 0,1 à 1 000 Pa.s à 25°C.

4. Composition de polyorganosiloxane selon une ou plusieurs des revendications 1 à 3, **caractérisée en ce que** le réticulant alcoxysilane/siloxane est au moins un constituant qui est choisi dans le groupe qui consiste en vinyltrialcoxysilane, méthoxyéthyltrialcoxysilane, méthyltrialcoxysilane et tétraalcoxysilane.

5. Composition de polyorganosiloxane selon une ou plusieurs des revendications 1 à 4, **caractérisée en ce qu'**elle peut être obtenue par mélange des composants suivants :
a) 30 à 99,3 % en masse d'au moins un polyorganosiloxane susceptible de réticulation,
b) 0,3 à 10 % en masse d'au moins un réticulant alcoxysilane/siloxane,
c) 0,05 à 10 % en masse d'au moins un ester d'acide phosphorique,
d) 0,2 à 5 % en masse d'au moins un catalyseur contenant de l'étain ou contenant un chélate de Ti,
e) 0,1 à 30 % en masse d'au moins un aminoalkylsiloxane,
f) 0,05 à 2 % en masse, pour 100 parties en masse de composition, d'au moins un composé choisi dans le groupe qui consiste en un isocyanurate de formule 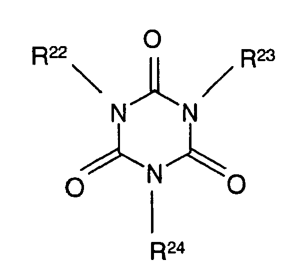
où R²², R²³ et R²⁴ peuvent être identiques ou différents les uns des autres et sont choisis dans chaque cas indépendamment les uns des autres dans le groupe qui consiste en trisalcoxysilylalkyle et alcényle, avec la condition qu'au moins l'un des substituants R²², R²³ et R²⁴ soit un groupe trisalcoxysilylalkyle,
un cyanurate de formule 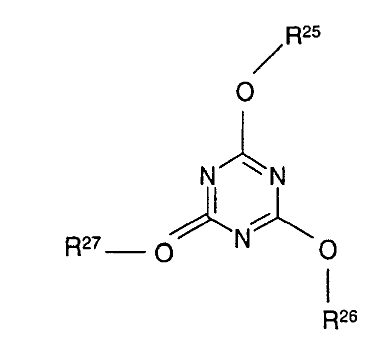
où R²⁵, R²⁶ et R²⁷ peuvent être identiques ou différents les uns des autres et sont choisis dans chaque cas indépendamment les uns des autres dans le groupe qui consiste en trisalcoxysilylalkyle et alcényle, avec la condition qu'au moins l'un des substituants R²⁵, R²⁶ et R²⁷ soit un groupe trisalcoxysilylalkyle,
ainsi que les produits de condensation avec des liaisons Si-O-Si des isocyanurates et cyanurates cités précédemment et leurs mélanges,
(g) 0 à 60 % en masse d'une charge,
(h) 0 à 50 % en masse d'un adjuvant choisi parmi les siloxanes non susceptibles de réticulation, les promoteurs d'adhésion, les fongicides, les solvants, d'un colorant et/ou pigment organique.

6. Composition qui peut être obtenue par vulcanisation d'une composition de polyorganosiloxane selon une ou plusieurs des revendications 1 à 5.

7. Matériau composite contenant un substrat et la composition selon la revendication 6.

8. Procédé pour vulcaniser une composition de polyorganosiloxane selon une ou plusieurs des revendications 1 à 5, **caractérisé en ce qu'**on fait venir en contact avec de l'eau la composition de polyorganosiloxane citée à une température de 0 à 120°C.

9. Utilisation d'une composition de polyorganosiloxane selon une ou plusieurs des revendications 1 à 5 comme matériau d'étanchéité pour joints, adhésif, masse de revêtement ou pièce mise en forme.

10. Utilisation d'une composition de polyorganosiloxane qui contient 0,05 à 2 % en masse d'au moins un composé choisi dans le groupe qui consiste en un isocyanurate de formule 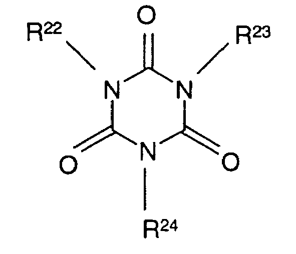
où R²², R²³ et R²⁴ peuvent être identiques ou différents les uns des autres et sont choisis dans chaque cas indépendamment les uns des autres dans le groupe qui consiste en trisalcoxysilylalkyle et alcényle, avec la condition qu'au moins l'un des substituants R²², R²³ et R²⁴ soit un groupe trisalcoxysilylalkyle,
un cyanurate de formule 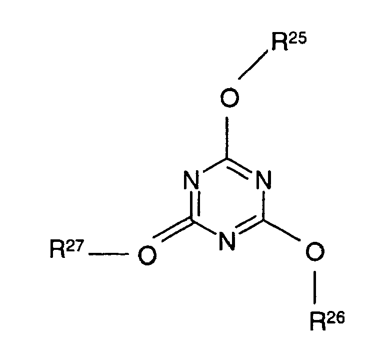
où R²⁵, R²⁶ et R²⁷ peuvent être identiques ou différents les uns des autres et sont choisis dans chaque cas indépendamment les uns des autres dans le groupe qui consiste en trisalcoxysilylalkyle et alcényle, avec la condition qu'au moins l'un des substituants R²⁵, R²⁶ et R²⁷ soit un groupe trisalcoxysilylalkyle,
ainsi que les produits de condensation avec des liaisons Si-O-Si des isocyanurates et cyanurates cités précédemment et leurs mélanges, par rapport à la quantité totale de composition de polyorganosiloxane, pour l'application sur des substrats de poly(méthacrylate de méthyle).
